# EUROPÄISCHE PATENTSCHRIFT

(11) **EP 4 077 960 B1**
(45) Veröffentlichungstag und Bekanntmachung des Hinweises auf die Patenterteilung: **07.02.2024**
(21) Anmeldenummer: 20829820.8
(22) Anmeldetag: 11.12.2020
(51) Int. Cl.: F16D 13/66, F16D 13/75

(54) **KUPPLUNGSVORRICHTUNG**
COUPLING DEVICE
DISPOSITIF D'EMBRAYAGE

(30) Priorität: 20.12.2019 DE 102019135350
(43) Veröffentlichungstag der Anmeldung: 26.10.2022
(73) Patentinhaber: Voith Patent GmbH, 89522 Heidenheim (DE)
(72) Erfinder: PÖNITZ, Jonny, 09235 Burkhardtsdorf (DE)
(86) Internationale Anmeldenummer: PCT/EP2020/085687
(87) Internationale Veröffentlichungsnummer: WO 2021/122352

(56) Entgegenhaltungen:
- US-A- 3 001 623
- US-A1- 2005 000 775
- US-A1- 2018 216 685

## Beschreibung

Die Erfindung betrifft eine Kupplungsvorrichtung mit Reibbelägen, insbesondere zur Schaltung von Nebenaggregaten in Kraftfahrzeugen, mit einer Betriebsstellung und einer Leerlaufstellung.

Moderne Kraftfahrzeuge kommen nicht mehr ohne Nebenaggregate zur Umsetzung von Nebenfunktionen aus. Ein solches Aggregat kann beispielsweise ein Kompressor oder ein Retarder sein, das bei Bedarf über eine schaltbare Kupplung zugeschaltet wird. Bei geöffneter Kupplung sind die Nebenaggregate abgeschaltet, so dass der Energieverbrauch des Fahrzeugs reduziert ist.

Die Kraftübertragung bei schaltbaren Kupplungen erfolgt in der Regel über Reibbeläge, die nur für eine bestimmte Anzahl von Schaltzyklen ausgelegt sind. Gerade bei sicherheitsrelevanten Nebenaggregaten, wie zum Beispiel dem Luftkompressor bei Kraftfahrzeugen, der die Druckluft für das Betriebsbremssystem bereitstellt, darf eine zwischen Antrieb und Aggregat geschaltete Kupplung nicht versagen.

Derartige Kupplungen müssen mit einem sogenannten Fail-Safe-System ausgerüstet werden, mit dem sichergestellt wird, dass zumindest ein Notlauf gewährleistet ist. Das Fail-Safe-System gewährleistet im unbetätigten Zustand, dass die Kupplung sich in der Schließstellung befindet und nur bei Betätigung in die Offenstellung bewegt wird. Damit wird sichergestellt, dass bei einer Fehlfunktion in der Betätigungssteuerung die Kupplung geschlossen bleibt und die Funktion des Nebenaggregats weiterhin gewährleistet ist.

Ein solches Fail-Safe-System ist allerdings nicht dazu geeignet einen Verschleiß an den Belägen zu erkennen, so dass es im Extremfall zu einem Ausfall der Kupplung kommen kann, wenn der Verschleiß der Beläge zu weit fortgeschritten ist, so dass die Kupplung nicht mehr das erforderliche Moment übertragen kann.

Aus der DE 10 2017 114 325 A1 ist beispielsweise eine konisch ausgeführte Reibkupplung bekannt, die mittels eines Federelementes im Ruhestand geschlossen ist und mittels des Betätigungselementes geöffnet

Aus der DE 10 2013 008 071 A1 ist weiterhin eine Kupplung bekannt die ein Arretierungselement aufweist, mittels dem das Betätigungselement der Kupplung arretiert werden kann.

Aus der US 2018/216685 A1 ist ein Kupplungs- und Bremssystem bekannt, bei dem axiale Bewegungen der Bauteile zum Bremsen und Kuppeln über Kugelbewegungen, auf schiefen Ebenen umgesetzt ist.

Die Aufgabe der Erfindung ist es, ein Fail-Safe-System für eine Kupplung vorzuschlagen, welches eine Notlauffunktion sicherstellt.

Die Aufgabe wird erfindungsgemäß durch eine Kupplungsvorrichtung entsprechend Anspruch 1 gelöst. Weitere vorteilhafte Merkmale der erfindungsgemäßen Ausführung finden sich in den Unteransprüchen.

Es wird eine Kupplungsvorrichtung mit Reibbelägen, insbesondere zur Schaltung von Nebenaggregaten in Kraftfahrzeugen, vorgeschlagen. Diese Kupplungsvorrichtung umfasst ein um eine Achse drehbar gelagertes Kupplungsgehäuse, an dem ein erster Reibbelag angeordnet ist, und ein um die Achse drehbar gelagerten Konusring, an dem ein zweiter Reibbelag angeordnet ist, wobei die Reibbeläge derart zueinander angeordnet sind, dass sie in einer Kontaktebene flächig in Kontakt bringbar sind. Weiterhin umfasst die Kupplungseinrichtung ein Federelement, mittels dem der Konusring entlang der Achse in eine Betriebsstellung, in der sich die Reibbeläge in der Kontaktebene berühren, bewegt und in der Betriebsstellung gehalten werden kann, und eine Kupplungsbetätigungsvorrichtung zum Verschieben des Konusrings entgegen der Federkraft des Federelementes in eine Leerlaufstellung, in der sich die Reibbeläge nicht berühren.

Erfindungsgemäß wird vorgeschlagen, dass am Kupplungsgehäuse eine Anschlagfläche und an dem Konusring eine Bezugsfläche vorgesehen sind, wobei zwischen Anschlagfläche und Bezugsfläche ein Verschleißspalt gebildet wird, der mit zunehmendem Verschleiß der Reibbeläge breiter wird, wobei die Kupplungsvorrichtung ein Verriegelungselement umfasst, das in den Verschleißspalt bewegbar ist, wenn dieser eine festlegbare Maximalbreite überschreitet. Sobald sich das Verriegelungselement in dem Verschleißspalt bewegt hat, wird die Bewegung des Konusrings verhindert und die Kupplung in der Schließstellung gehalten, so dass die Funktion des Nebenaggregates sichergestellt ist.

In einer bevorzugten Ausführung kann das Verriegelungselement zwischen Konusring und Kupplungsgehäuse angeordnet sein. Wobei weiterhin, vorzugsweise über den Umfang des Konusrings verteilt, mehrere Verriegelungselemente vorgesehen sein können.

Weiterhin kann jedes Verriegelungselement eine Kugel umfassen, wobei der Kugel ein Kugelaufnahmeraum im Konusring zugeordnet ist. Der Kugelaufnahmeraum ist vorzugsweise so groß, dass die Kugel in diesem frei beweglich ist.

Des Weiteren kann am Kupplungsgehäuse eine Anlagefläche und am Konusring eine Anlagefläche vorgesehen sein, wobei der Verschleißspalt zwischen den Anlageflächen angeordnet ist.

Der Kugelaufnahmeraum im Konusring weist vorzugsweise eine Öffnung auf, die derart ausgelegt ist, dass bei Rotation der Kupplungsvorrichtung die Kugel, durch die auftretenden Fliehkräfte, gegen die Anlageflächen gepresst wird und die Kugel in den Verschleißspalt eintritt, wenn der Kugeldurchmesser kleiner ist als die Breite des Verschleißspalts.

In einer weiterhin bevorzugten Ausführung weist die Bezugsfläche einen ersten Bereich auf, in dem die Bezugsfläche parallel zur Anschlagfläche verläuft, und einen zweiten Bereich, in der die Bezugsfläche winkelig zur Anschlagfläche verläuft. Der erste Bereich ist radial außerhalb des Kugelaufnahmeraums angeordnet und der zweite Bereich ist in Achsrichtung gesehen links und/oder rechts neben dem ersten Bereich und dem Kugelaufnahmeraum angeordnet.

Der erste Bereich der Bezugsfläche schließt somit an den zweiten Bereich an, so dass bei relativer Rotation von Kupplungsgehäuse gegenüber dem Konusring im Verschleißspalt die Kugel vom ersten Bereich in Richtung zweiten Bereich bewegt wird und dort zwischen Bezugsfläche und Anschlagfläche im Verschleißspalt eingeklemmt wird.

Der zweite Bereich kann weiterhin derart gestaltet sein, dass bei einer relativen Verdrehung von Kupplungsgehäuse gegenüber dem Konusring, der Verschleißspalt, durch die Kugel, vergrößert wird, so dass eine die Federkraft der Federelemente unterstützende Kraft auf die Reibbeläge wirkt, so dass diese in der Kontaktebene 17 gegeneinander gepresst werden. Dadurch wird erreicht, dass die verschlissenen Reibbeläge immer mit einer ausreichenden Kraft gegeneinander gepresst werden, so dass eine Relativbewegung der Reibbeläge, Schlupf, vermieden wird. Dies hat auch deshalb eine besondere Bedeutung, da die Federkraft mit zunehmendem Verschleiß nachlässt, weil sich der Federweg vergrößert.

Das Nebenaggregat kann beispielsweise ein Kompressor oder ein Retarder sein.

Anhand von Ausführungsbeispielen werden weitere vorteilhafte Ausprägungen der Erfindung unter Bezugnahme auf die Zeichnungen erläutert.

Die Figuren zeigen im Einzelnen:
- Fig.1: Kupplungvorrichtung im gekoppelten Zustand mit unverschlissenen Reibbelägen
- Fig.2: Kupplungvorrichtung im entkoppelten Zustand mit unverschlissenen Reibbelägen
- Fig.3: Kupplungvorrichtung verriegelten Zustand
- Fig.4: Konusring der Kupplung
- Fig.5: Teilschnitt zur Darstellung der Bezugsfläche am Konusring

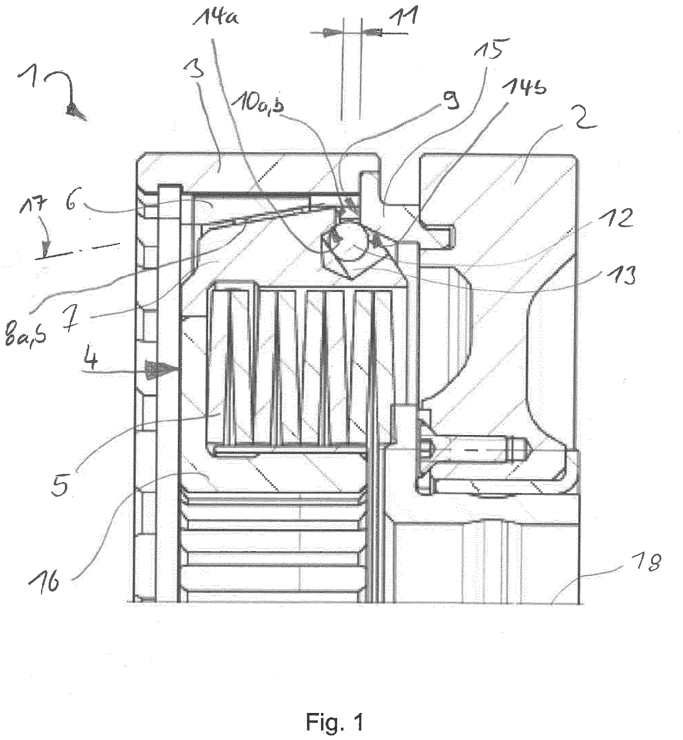

Figur 1 zeigt den Aufbau einer erfindungsgemäßen Kupplungsvorrichtung 1 im gekoppelten Zustand, mit unverschlissenen Reibbelägen 8a, b. Die Kupplung 1 setzt sich aus zwei um die Achse 18 drehbar gelagerten Baugruppen zusammen. Die erste Baugruppe ist die Primärseite der Kupplung oder auch die Antriebbaugruppe, zu der das Antriebszahnrad 2 auf der Nabe 20, der Kupplungsgehäusedeckel 15, das Kupplungsgehäuse 3 und der Kupplungsaußenring 6 mit dem Reibbelag 8a gehören. Die zweite Baugruppe ist die Sekundärseite der Kupplung oder auch die Abtriebsbaugruppe, zu der der Konusring 7 mit dem Reibbelag 8b und der Konusringträger 16 gehören.

Im Sinne der Erfindung sind die Bauteile der Primärseite unter dem Begriff Kupplungsgehäuse 3 und die Bauteile der Sekundärseite unter dem Begriff Konusring 7 zusammengefasst.

Die hier dargestellte Kupplungsvorrichtung 1 ist derart konstruiert, dass mehrere Verriegelungsvorrichtungen mit jeweils einer Kugel 12 gleichmäßig am Umfang verteilt vorgesehen sind. Im dargestellten Zustand befindet sich die Kupplungsvorrichtung 1 in der Schließstellung, bei der sich die Reibbeläge 8a,b in der Kontaktebene 17 berühren. Die Anpresskraft mit der die Reibbeläge 8a, b gegeneinander gepresst werden, wird über die Federkraft des Federelements 5 bestimmt, wobei das Federelement 5 aus mehreren Tellerfeder zusammensetzt ist, die im Wesentlichen in der Abtriebsbaugruppe, Konusring 7 und Konusringträger 16, angeordnet sind und sich gegenüber der Antriebsbaugruppe, hier an der Nabe 20, abstützt.

Das Kupplungsgehäuse 3 bzw. die Antriebsbaugruppe ist auf einer hier nicht dargestellten, um die Achse 18 drehbar gelagerten, Antriebswelle fixiert. Mittels einer Kupplungsbetätigungsvorrichtung 4, die hier nur symbolisch als Pfeil dargestellt ist, kann die Abtriebsbaugruppe entlang der Achse 18, auf einer hier nicht dargestellten Abtriebswelle, entgegen der Federkraft verschoben werden.

In der Schließstellung der Kupplungsvorrichtung 1 befindet sich die Kugel 12 in dem Kugelaufnahmeraum 13 des Konusrings 7, der eine Öffnung 19 in Radialrichtung aufweist, durch die die Kugel 12 aus dem Kugelaufnahmeraum 13 austreten kann. Bei Rotation der Kupplungsvorrichtung 1 wird die Kugel 12, wie dargestellt, durch die Zentrifugalkraft gegen die Anlageflächen 14a, b am Konusring 7 und am Kupplungsgehäusedeckel 15 gepresst. Die V-förmige Anordnung der Anlageflächen 14a, b zueinander bewirkt eine Zentrierung der Kugel 12 gegenüber dem Verschleißspalt 11.

Der Verschleißspalt 11 ist ein Spalt, der zwischen der Anschlagfläche 9 am Kupplungsgehäusedeckel 15 und der Bezugsfläche 10a, b am Konusring 7 gebildet wird. Der Verschleißspalt 11 verändert seine Breite mit zunehmendem Verschleiß der Reibbeläge 8a, b. Die Kugel bleibt im Wesentlichen in der dargestellten Position, bis der Verschleiß einen Grad erreicht hat, bei dem die Breite des Verschleißspaltes 11 so groß geworden ist, dass diese dem Kugeldurchmesser entspricht.

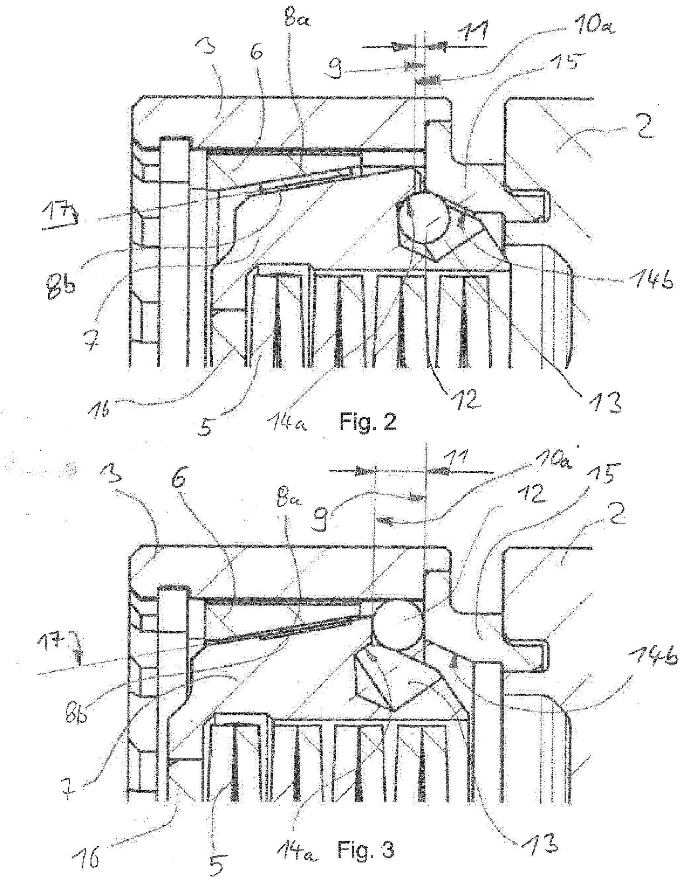

Figur 2 zeigt die Kupplungsvorrichtung 1 im entkoppelten Zustand, mit unverschlissenen Reibbelägen 8a, b. Auch wenn dies in der Skizze nicht direkt zu entnehmen ist, berühren sich die Reibbeläge 8a, b nicht. Der Verschleißspalt 11 hat sich um den Verschiebeweg bzw. Auskuppelweg verkleinert, so dass die Kugel 12 über die Anlageflächen 14a, b weiter in den Kugelaufnahmeraum 13 gedrückt wird.

Figur 3 zeigt die Kupplungsvorrichtung 1 im gekoppelten Zustand, wobei die Reibbeläge 8a, b verschlissen sind, so dass der Verschleißspalt 11 eine Breite aufweist, die ausreicht, dass sich die Kugel 12 durch die Fliehkräfte in den Verschleißspalt 11 bewegen konnte. In dieser Position verhindert die Kugel 12 ein erneutes Entkuppeln der Kupplungsvorrichtung 1, so dass eine dauerhafte Antriebsverbindung entsteht.

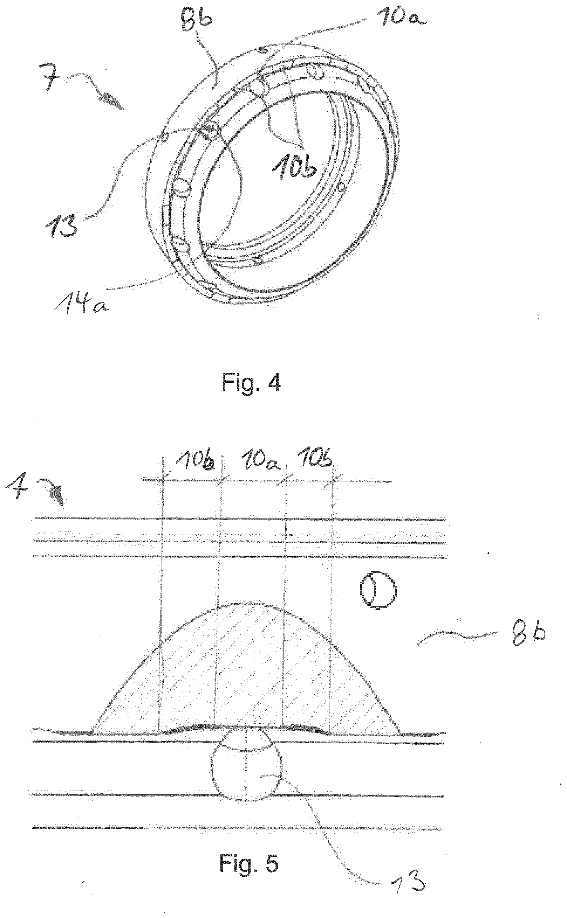

Figur 4 zeigt den Konusring 7 in der Perspektive und in Figur 5 ist ein Teilschnitt zur Darstellung der Bezugsfläche 10a, b am Konusring 7. Es ist zu erkennen, dass die Bezugsfläche 10a, b einen ersten Bereich 10a und zwei zweite Bereich 10b aufweist.

In Bezug auf die hier nicht dargestellte Anschlagfläche 9 ist die Bezugsfläche im ersten Bereich 10a parallel zur Anschlagfläche 9 und die Bezugsflächen 10b im zweiten Bereich winkelig zur Anschlagfläche 9 angeordnet. Der erste Bereich 10a ist weiterhin radial außerhalb des Kugelaufnahmeraums 13 angeordnet und der zweite Bereich 10b ist in Achsrichtung gesehen links und/oder rechts neben dem ersten Bereich 10a und dem Kugelaufnahmeraum 13 angeordnet.

Der zweiten Bereich 10b bzw. die winkelige Anordnung ist derart gestaltet, dass bei relativer Verdrehung von Kupplungsgehäuse 3 gegenüber dem Konusrings 7 der Verschleißspalt 11 durch die Kugel 12 vergrößert wird, so dass eine die Federkraft der Federelemente 5 unterstützende Kraft auf die Reibbeläge 8a, b wirkt, so dass diese in der Kontaktebene 17 gegeneinander gepresst werden.

### Bezugszeichenliste

- 1: Kupplungsvorrichtung
- 2: Antriebszahnrad
- 3: Kupplungsgehäuse
- 4: Kupplungsbetätigungsvorrichtung
- 5: Federelemente
- 6: Kupplungsaußenring
- 7: Konusring
- 8a, b: Reibbeläge
- 9: Anschlagfläche
- 10a, b: Bezugsflächen
- 11: Verschleißspalt
- 12: Kugel
- 13: Kugelaufnahmeraum
- 14a, b: Anlageflächen
- 15: Kupplungsgehäusedeckel
- 16: Konusringträger
- 17: Kontaktebene
- 18: Achse
- 19: Öffnung
- 20: Nabe

## Patentansprüche

1. Kupplungsvorrichtung (1) mit Reibbelägen (8a, b), insbesondere zur Schaltung von Nebenaggregaten in Kraftfahrzeugen,
mit einem um eine Achse (18) drehbar gelagertem Kupplungsgehäuse (3), an dem ein erster Reibbelag (8a) angeordnet ist;
mit einem um die Achse (18) drehbar gelagerten Konusring (7), an dem ein zweiter Reibbelag (8b) angeordnet ist,
wobei die Reibbeläge (8a, b) derart zueinander angeordnet sind, dass sie in einer Kontaktebene (17) flächig in Kontakt bringbar sind,
mit einem Federelement (5) mittels dem der Konusring (7) entlang der Achse (18) in eine Betriebsstellung, in der sich die Reibbeläge (8a, b) in der Kontaktebene (17) berühren, bewegt und in der Betriebsstellung gehalten werden kann,
und einer Kupplungsbetätigungsvorrichtung (4) zum Verschieben des Konusrings (7) entgegen der Federkraft des Federelementes (5) in eine Leerlaufstellung, in der sich die Reibbeläge (8a, b) nicht berühren, **dadurch gekennzeichnet, dass**
das am Kupplungsgehäuse (3) ein Anschlagfläche (9) vorgesehen ist und an dem Konusring (7) eine Bezugsfläche (10a, b) vorgesehen ist, wobei zwischen Anschlagfläche (9) und Bezugsfläche (10a, b) ein Verschleißspalt (11) gebildet wird, der mit zunehmendem Verschleiß der Reibbeläge (8a, b) breiter wird, wobei die Kupplungsvorrichtung ein Verriegelungselement umfasst, dass in den Verschleißspalt (11) bewegbar ist, wenn dieser eine festlegbare Maximalbreite überschreitet.

2. Kupplungsvorrichtung nach Anspruch 1,
**dadurch gekennzeichnet, dass**
das Verriegelungselement zwischen Konusring (7) und Kupplungsgehäuse (3) angeordnet ist.

3. Kupplungsvorrichtung nach Anspruch 1,
**dadurch gekennzeichnet, dass**
das über den Umfang des Konusrings (7) verteilt mehrere Verriegelungselemente vorgesehen sind.

4. Kupplungsvorrichtung nach Anspruch 2 oder 3,
**dadurch gekennzeichnet, dass**
das jedes Verriegelungselement eine Kugel (12) umfasst und jeder Kugel (12) ein Kugelaufnahmeraum (13) im Konusring (7) zugeordnet ist.

5. Kupplungsvorrichtung nach Anspruch 1,
**dadurch gekennzeichnet, dass**
am Kupplungsgehäuse (3) eine Anlagefläche (14a) und am Konusring (7) eine Anlagefläche (14b) vorgesehen sind, wobei der Verschleißspalt (11) zwischen den Anlageflächen (14a, b) angeordnet ist.

6. Kupplungsvorrichtung nach Anspruch 5,
**dadurch gekennzeichnet, dass**
der Kugelaufnahmeraum (13) im Konusring (7) eine Öffnung (19) aufweist, die derart ausgelegt ist, dass bei Rotation der Kupplungsvorrichtung (1) die Kugel (12) durch die auftretenden Fliehkräfte gegen die Anlageflächen (14a, b) gepresst wird und die Kugel in den Verschleißspalt (11) eintritt wenn der Kugeldurchmesser kleiner ist als die Breite des Verschleißspalts (11).

7. Kupplungsvorrichtung nach Anspruch 1,
**dadurch gekennzeichnet, dass**
die Bezugsfläche (10a, b) einen ersten Bereich (10a) aufweist, in dem die Bezugsfläche parallel zur Anschlagfläche (9) verläuft und einen zweiten Bereich (10b), in der die Bezugsfläche winkelig zur Anschlagfläche (9) verläuft.

8. Kupplungsvorrichtung nach Anspruch 7,
**dadurch gekennzeichnet, dass**
der erste Bereich (10a) radial außerhalb des Kugelaufnahmeraums (13) angeordnet ist und der zweite Bereich (10b) in Achsrichtung gesehen links und/oder rechts neben dem ersten Bereich (10a) und dem Kugelaufnahmeraum (13) angeordnet ist.

9. Kupplungsvorrichtung nach Anspruch 7,
**dadurch gekennzeichnet, dass**
der zweiten Bereich (10b) derart gestaltet ist, dass bei einer relativen Verdrehung von Kupplungsgehäuse (3) gegenüber dem Konusring (7) der Verschleißspalt (11), durch die Kugel (12), vergrößert wird, so dass eine die Federkraft der Federelemente (5) unterstützende Kraft auf die Reibbeläge (8a, b) wirkt, so dass diese in der Kontaktebene (17) gegeneinander gepresst werden.

10. Kupplungsvorrichtung nach Anspruch 1,
**dadurch gekennzeichnet, dass**
das Nebenaggregat ein Kompressor oder ein Retarder ist.

## Claims

1. Coupling device (1) with friction linings (8a,b) in particular for switching auxiliary units in motor vehicles, with a coupling housing (3) mounted for rotation about an axis (18) and on which a first friction lining (8a) is arranged, with a cone ring (7) mounted for rotation about the axis (18) and on which a second friction lining (8b) is arranged, wherein the friction linings (8a,b) are arranged relative to one another such that they can be brought into flat surface contact in a contact plane (17), with a spring element (5) by means of which the cone ring (7) is moved along the axis (18) into an operating position in which the friction linings (8a,b) are in contact in the contact plane (17), and can be held in the operating position,
and a coupling actuating device (4) for displacing the cone ring (7) against the spring force of the spring element (5) into an idling position in which the friction linings (8a, b) are not in contact,
**characterized in that** a stop face (9) is provided on the coupling housing (3) and a reference surface (10a, b) is provided on the cone ring (7), wherein a wear gap (11) which is formed between the stop face (9) and the reference surface (10a, b) becomes wider with increasing wear on the friction linings (8a, b) wherein the coupling device comprises a locking element which is movable into the wear gap (11) when the latter exceeds a fixable maximum width.

2. Coupling device as claimed in Claim 1, **characterized in that** the locking element is arranged between the cone ring (7) and the coupling housing (3).

3. Coupling device as claimed in Claim 1, **characterized in that** several locking elements are provided spread out over the circumference of the cone ring (7).

4. Coupling device as claimed in Claim 2 or 3, **characterized in that** each locking element comprises a ball (12) and each ball (12) is assigned a ball receiving space (13) in the cone ring (7).

5. Coupling device as claimed in Claim 1, **characterized in that** a contact bearing face (14a) is provided on the coupling housing (3) and a contact bearing face (14b) is provided on the cone ring (7) wherein the wear gap (11) is arranged between the contact bearing faces (14a, b).

6. Coupling device as claimed in Claim 5, **characterized in that** the ball receiving space (13) in the cone ring (7) has an opening (19) which is configured such that during rotation of the coupling device (1) the ball (12) is pressed through the ensuing centrifugal forces against the contact bearing faces (14a, b) and the ball enters the wear gap (11) when the ball diameter is smaller than the width of the wear gap (11).

7. Coupling device as claimed in Claim 1, **characterized in that** the reference surface (10a, b) has a first region (10a) in which the reference surface runs parallel to the stop face (9) and a second region (10b) in which the reference surface runs at an angle to the stop face (9).

8. Coupling device as claimed in Claim 7, **characterized in that** the first region (10) is arranged radially outside of the ball receiving space (13) and the second region (10b), seen in the axial direction, is arranged on the left and/or right next to the first region (10a) and the ball receiving space (13).

9. Coupling device as claimed in Claim 7, **characterized in that** the second region (10b) is configured such that during a relative rotation of the coupling housing (3) relative to the cone ring (7) the wear gap (11) is enlarged by the ball (12) so that a force boosting the spring force of the spring elements (5) acts on the friction linings (8a, b) so that these are pressed against one another in the contact plane (17).

10. Coupling device as claimed in Claim 1, **characterized in that** the auxiliary unit is a compressor or a retarder.

## Revendications

1. Dispositif d'embrayage (1) comportant des garnitures de friction (8a, b), en particulier pour la commutation de groupes auxiliaires dans des véhicules automobiles,
comportant un carter d'embrayage (3) monté rotatif autour d'un axe (18), carter sur lequel une première garniture de friction (8a) est disposée ;
comportant une bague conique (7) montée rotative autour de l'axe (18), bague sur laquelle une deuxième garniture de friction (8b) est disposée,
les garnitures de friction (8a, b) étant disposées l'une par rapport à l'autre de telle sorte qu'elles peuvent être amenées en contact plan dans un plan de contact (17),
comportant un élément ressort (5) au moyen duquel la bague conique (7) se déplace le long de l'axe (18) dans une position de fonctionnement dans laquelle les garnitures de friction (8a, b) sont en contact l'une avec l'autre dans le plan de contact (17) et peut être retenue dans la position de fonctionnement,
et un dispositif d'actionnement d'embrayage (4) servant au déplacement de la bague conique (7) à l'encontre de la force de ressort de l'élément ressort (5) dans une position neutre dans laquelle les garnitures de friction (8a, b) ne sont pas en contact l'une avec l'autre,
**caractérisé en ce**
**qu'**une surface de butée (9) est prévue sur le carter d'embrayage (3) et une surface de référence (10a, b) est prévue sur la bague conique (7), un interstice d'usure (11) étant formé entre la surface de butée (9) et la surface de référence (10a, b), lequel interstice d'usure devient plus large lorsque l'usure des garnitures de friction (8a, b) augmente, le dispositif d'embrayage comprenant un élément de verrouillage qui est mobile dans l'interstice d'usure (11) lorsque celui-ci dépasse une largeur maximale pouvant être prédéfinie.

2. Dispositif d'embrayage selon la revendication 1, **caractérisé en ce que**
l'élément de verrouillage est disposé entre la bague conique (7) et le carter d'embrayage (3).

3. Dispositif d'embrayage selon la revendication 1, **caractérisé en ce que**
plusieurs éléments de verrouillage sont prévus de manière répartie sur la périphérie de la bague conique (7).

4. Dispositif d'embrayage selon la revendication 2 ou 3,
**caractérisé en ce que**
chaque élément de verrouillage comprend une bille (12) et un espace de réception de bille (13) est associé à chaque bille (12) dans la bague conique (7).

5. Dispositif d'embrayage selon la revendication 1, **caractérisé en ce**
**qu'**une surface d'appui (14a) est prévue sur le carter d'embrayage (3) et une surface d'appui (14b) est prévue sur la bague conique (7), l'interstice d'usure (11) étant disposé entre les surfaces d'appui (14a, b).

6. Dispositif d'embrayage selon la revendication 5, **caractérisé en ce que**
l'espace de réception de bille (13) dans la bague conique (7) présente une ouverture (19) qui est configurée de telle sorte que, lors de la rotation du dispositif d'embrayage (1), la bille (12) est pressée contre les surfaces d'appui (14a, b) par les forces centrifuges se produisant et la bille entre dans l'interstice d'usure (11) lorsque le diamètre de bille est inférieur à la largeur de l'interstice d'usure (11).

7. Dispositif d'embrayage selon la revendication 1, **caractérisé en ce que**
la surface de référence (10a, b) présente une première région (10a) dans laquelle la surface de référence s'étend parallèlement à la surface de butée (9) et une deuxième région (10b) dans laquelle la surface de référence s'étend de manière angulaire par rapport à la surface de butée (9).

8. Dispositif d'embrayage selon la revendication 7, **caractérisé en ce que**
la première région (10a) est disposée radialement à l'extérieur de l'espace de réception de bille (13) et la deuxième région (10b), vue dans la direction axiale, est disposée à gauche et/ou à droite de la première région (10a) et de l'espace de réception de bille (13).

9. Dispositif d'embrayage selon la revendication 7, **caractérisé en ce que**
la deuxième région (10b) est configurée de telle sorte que, lors d'une rotation relative du carter d'embrayage (3) par rapport à la bague conique (7), l'interstice d'usure (11) est agrandi par la bille (12), de sorte qu'une force assistant la force de ressort des éléments ressorts (5) agisse sur les garnitures de friction (8a, b), de sorte que celles-ci soient pressées l'une contre l'autre dans le plan de contact (17).

10. Dispositif d'embrayage selon la revendication 1, **caractérisé en ce que**
le groupe auxiliaire est un compresseur ou un ralentisseur.
